# DEMANDE DE BREVET EUROPEEN

(11) **EP 1 850 526 A2**
(43) Date de publication de la demande: **31.10.2007**
(21) Numéro de dépôt: 07106658.3
(22) Date de dépôt: 20.04.2007
(51) Int. Cl.: H04L 12/18, H04Q 7/38

(54) **Dispositif de gestion de fourniture d'informations de configuration d'équipements d'utilisateurs pour la surveillance de service(s) de diffusion d'un réseau mobile**

(30) Priorité: 24.04.2006 FR 0651430
(71) Demandeur: Alcatel Lucent, 75008 Paris (FR)
(72) Inventeur: BOURDEAUT, Stanislas, 75015, PARIS (FR)
(74) Mandataire: El Manouni, Josiane

(57) **Abrégé**

Un dispositif (D) est dédié à la gestion de la fourniture à des équipements d'utilisateurs (3-j) d'informations relatives à un réseau de (télé) communication mobile disposant d'un réseau d'accès radio (4). Ce dispositif comprend des moyens de gestion (MG) chargés de générer à destination d'équipements d'utilisateurs (3-j) des messages de signalisation de réseau d'accès radio contenant une partie au moins des informations destinées à permettre a ces équipements d'utilisateurs (3-j) de se configurer afin de surveiller au moins ran service de diffusion de contenus multimédia dans des cellules (Ci) du réseau d'accès radio (4), et d'ordonner à un contrôleur de réseau radio (2) du réseau d'accès radio (4) de transmettre ces messages aux équipements d'utilisateurs (3-j) dans la bande sur au moins un canal de trafic commun de type CTCH ou dans un canal de signalisation de type BCH.

## Description

L'invention concerne le domaine des réseaux de (télé)communication mobile (ou cellulaire), et plus précisément la fourniture à des équipements d'utilisateurs d'informations destinées à leur permettre d'accéder à des services de diffusion de contenus multimédia.

On entend ici par « service de diffusion » tout service de diffusion unidirectionnelle de type point-à-multipoints, et notamment le service de diffusion de type MBMS (« Multimedia Broadcast / Multimedia Service »), le service de diffusion de type SDMB (« Satellite Digital Multimedia Broadcast »), le service de diffusion de type DVB-H (« Digital Video Broadcast-Handset »), y compris sa variante adaptée aux réseaux satellitaires, et les services de diffusion proposés dans l'évolution de l'UMTS appelée LTE (« Long Term evolution ») et dans les réseaux GSM/GPRS (MBMS/GPRS).

Il est rappelé que le service de diffusion MBMS est défini dans la sixième version des spécifications 3GPP (3rd Generation Partnership Project), qui régit la transmission de données multimédia dans les réseaux mobiles (ou cellulaires), comme par exemple les réseaux UMTS ou EDGE, et en particulier dans les spécifications techniques 3GPP TS 25.346 et TS 23.246 (notamment accessibles sur le site Internet du 3GPP à l'adresse « www.3gpp.org »).

Par ailleurs, on entend ici par « contenu multimédia » des fichiers de données (ou « data » en anglais), de la voix, des fichiers audio, ou des vidéos.

Comme le sait l'homme de l'art, pour que des équipements d'utilisateurs, comme par exemple les téléphones mobiles qui en sont à leur version n°99 (R99), puissent surveiller un service de diffusion de contenu mis à leur disposition par le réseau mobile auquel ils sont connectés, ils doivent être préalablement configurés à cet effet. Cette configuration se fait grâce à des informations qui sont transmises à l'équipement d'utilisateur par le réseau d'accès radio du réseau mobile via un canal de diffusion propre à la cellule (dite de service) dans laquelle il est situé à un instant donné. Ce canal de diffusion est habituellement le canal BCH (pour « Broadcast CHannel »).

Dans les réseaux mobiles actuels, par exemple de type UMTS, cette configuration ne permet à un équipement d'utilisateur que de surveiller un unique service de diffusion (de contenu) au sein de sa cellule de service. Par conséquent, un équipement mobile ne peut pas surveiller un autre service de diffusion au sein de sa propre cellule de service ou d'une cellule voisine de celle-ci. Il n'est donc actuellement pas possible, lorsque des équipements d'utilisateurs (intéressés par un service de diffusion donné) sont situés dans une cellule de service qui ne permet pas d'accéder à ce service de diffusion donné, de les re-diriger vers une autre cellule qui permet un tel accès. L'équipement d'utilisateur est donc contraint, lorsque cela s'avère possible (ce qui n'est pas toujours le cas), d'engager une procédure de re-sélection de cellule qui lui fait perdre du temps et peut parfois échouer.

Il a certes été proposé dans les spécifications techniques 3GPP TS 25.346, d'une part, un mécanisme de signalisation MBMS destiné à aider les équipements d'utilisateurs à re-sélectionner une cellule voisine de leur cellule de service pour accéder à un service MBMS, et d'autre part, des procédures dites de convergence fréquentielle de couche protocolaire (« frequency layer convergence procedures ») destinées à spécialiser une fréquence pour un service MBMS donné. Mais, la mise en oeuvre de ce mécanisme et de ces procédures au sein des réseaux actuels est complexe du fait qu'elle nécessite notamment de nouveaux canaux MBMS. De plus, les équipements d'utilisateurs (R99) existants ne supportent pas ce mécanisme et ces procédures.

L'invention a donc pour but d'améliorer la situation.

Elle propose à cet effet un dispositif dédié à la gestion de la fourniture à des équipements d'utilisateurs d'informations relatives à un réseau de (tété)communication mobile disposant d'un réseau d'accès radio, et comprenant des moyens de gestion chargés de générer à destination d'équipements d'utilisateurs des messages de signalisation de réseau d'accès radio contenant une partie au moins des informations destinées à permettre à ces équipements d'utilisateurs de se configurer afin de surveiller au moins un service de diffusion de contenus multimédia dans des cellules du réseau d'accès radio, et d'ordonner à un contrôleur de réseau radio (du réseau d'accès radio) de transmettre ces messages aux équipements d'utilisateurs dans la bande (« in-band ») sur au moins un canal de trafic commun de type CTCH ou dans un canal de signalisation de type BCH.

Le dispositif selon l'invention peut comporter d'autres caractéristiques qui peuvent être prises séparément ou en combinaison, et notamment :
- ses moyens de gestion peuvent être chargés de générer les messages de signalisation de réseau d'accès radio sous la forme de messages dédiés de type BMC (pour « Boadcast and Multicast Control ») ;
- en variante, ses moyens de gestion peuvent être chargés de contrôler l'encapsulation des messages de signalisation de réseau d'accès radio dans des messages de type BMC, et d'ordonner l'intégration dans l'entête de ces messages de type BMC de données signalant qu'ils comprennent un message de signalisation de réseau d'accès radio ;
- ses moyens de gestion peuvent être chargés d'intégrer dans les messages de signalisation de réseau d'accès radio des informations choisies parmi i) des informations de réseau relatives à des services de diffusion, ii) des informations de réseau destinées à permettre aux équipements d'utilisateurs d'effectuer des procédures supportées par un protocole de contrôle et de configuration de ressources radio et ne nécessitant pas de génération d'accusé de réception, iii) des informations de réseau relatives à au moins une technologie de diffusion présente dans au moins une cellule du réseau d'accès radio ou dans le voisinage d'une cellule de ce dernier, des informations de réseau relatives à au moins une technologie d'accès radio présente dans au moins une cellule du réseau d'accès radio ou dans le voisinage d'une cellule de ce dernier, et v) des informations de réseau relatives à au moins une technologie d'accès radio préférentielle, présente dans au moins une cellule du réseau d'accès radio ou dans le voisinage d'une cellule de ce dernier, et devant être choisie en priorité
   ➢ les services de diffusion sont par exemple choisis parmi MBMS, SDMB, DVB-H et ceux offerts par l'évolution de l'UMTS appelée LTE et par les réseaux GPRS ;
      - les informations de réseau relatives à des services de diffusion de type MBMS sont par exemple choisies parmi i) des informations de configuration de canaux de trafic communs de type CTCH accessibles dans une cellule de service et dans des cellules voisines de la cellule de service, ii) des informations relatives aux cellules voisines d'une cellule de service et qui supportent un canal de trafic commun de type CTCH transportant les données d'au moins un programme diffusé, iii) des informations relatives à au moins une cellule dans laquelle est diffusé au moins un programme donné, iv) des informations sur la préférence donnée à une technologie ou à une liste de cellules pour l'écoute d'un service de diffusion (par exemple MBMS) plutôt qu'un autre, v) des informations sur la programmation temporelle des services de diffusion, et vi) des informations sur les modalités d'inscription à un service de diffusion (par exemple l'adresse http d'un serveur de diffusion de contenus) ;
   ➢ les procédures sont par exemple choisies parmi i) l'établissement, la suppression ou la reconfiguration d'un lien entre un contrôleur de réseau radio et un équipement d'utilisateur (ou « Radio Bearer ») sur un canal de transport de type FACH, ii) un contrôle de mesures, iii) la sélection de la cellule ou de la technologie la plus appropriée pour écouter un canal de diffusion, et iv) les modifications de(s) paramètres ou de l'état d'un canal de diffusion en fonction de la date.

L'invention propose également un contrôleur de réseau radio, pour un réseau d'accès radio d'un réseau de (télé)communication mobile, équipé d'un dispositif de gestion du type de celui présenté ci-avant.

Un tel contrôleur de réseau radio peut par exemple comprendre une entité d'adaptation de services de diffusion de type BMC (ou « BMC entity ») chargée de transmettre les messages de signalisation générés par le dispositif de gestion, permettant ainsi d'inclure les informations réseau dont dispose le contrôleur de réseau radio dans les messages de type BMC.

L'invention propose également un équipement d'utilisateur, capable de se connecter à un réseau d'accès radio d'un réseau de (télé)communication mobile, et comprenant des moyens de traitement chargés, en cas de réception, en provenance d'un contrôleur de réseau radio du type de celui présenté ci-avant, d'un message de type BMC dans lequel se trouve encapsulé un message de signalisation de réseau d'accès radio, d'extraire ce message encapsulé afin de le transmettre à une application interne capable d'utiliser les informations qu'il contient et qui définissent comment se configurer pour surveiller au moins un service de diffusion de contenus multimédia dans des cellules du réseau d'accès radio.

L'invention est particulièrement bien adaptée, bien que de façon non exclusive, aux réseaux de (télé)communication mobile de type GPRS, UMTS ou CDMA, et toutes leurs variantes (comme par exemple CDMA2000).

D'autres caractéristiques et avantages de l'invention apparaîtront à l'examen de la description détaillée ci-après, et des dessins annexés, sur lesquels :
- la figure 1 illustre de façon très schématique et fonctionnelle l'architecture générale d'un réseau de (télé)communication mobile, comprenant un réseau d'accès radio muni d'un contrôleur de réseau radio, équipé d'un exemple de dispositif de gestion selon l'invention, et auquel sont connectés des exemples d'équipements d'utilisateurs selon l'invention, et
- la figure 2 illustre de façon schématique les piles de protocoles permettant la mise en oeuvre de l'invention dans un réseau mobile du type de celui illustré sur la figure 1.

Les dessins annexés pourront non seulement servir à compléter l'invention, mais aussi contribuer à sa définition, le cas échéant.

L'invention est destinée à permettre la fourniture à des équipements d'utilisateurs d'informations leur permettant de se configurer de manière à pouvoir surveiller des services de diffusion de contenus multimédia accessibles dans les cellules de service (ou « serving cells ») dans lesquelles ils sont situés et/ou dans des cellules voisines de ces dernières, ou encore dans le voisinage de ces cellules.

Dans ce qui suit, on considère à titre d'exemple non limitatif que les cellules font partie d'un réseau d'accès radio (ou UTRAN) d'un réseau de (télé)communication de type UMTS (pour « Universal Mobile Telecommunication System ») offrant des services de diffusion de contenus multimédia de type MBMS (ci-après appelés services MBMS).

Il est important de noter que ces services MBMS peuvent varier d'une cellule à l'autre ou d'un groupe de cellules à l'autre.

Mais, l'invention n'est pas limitée à ce type de réseau mobile. Elle concerne en effet tout réseau mobile (ou cellulaire) capable de mettre à la disposition d'équipements d'utilisateurs clients, éventuellement mobiles, des services de diffusion de contenus multimédia, par exemple ceux de type MBMS, ou ceux de type SDMB, ou ceux de type DVB-H (y compris ceux adaptés aux liaisons satellitaires), ou encore ceux proposés dans l'évolution de l'UMTS appelée LTE et dans les réseaux GSM/GPRS (SDMB/GPRS).

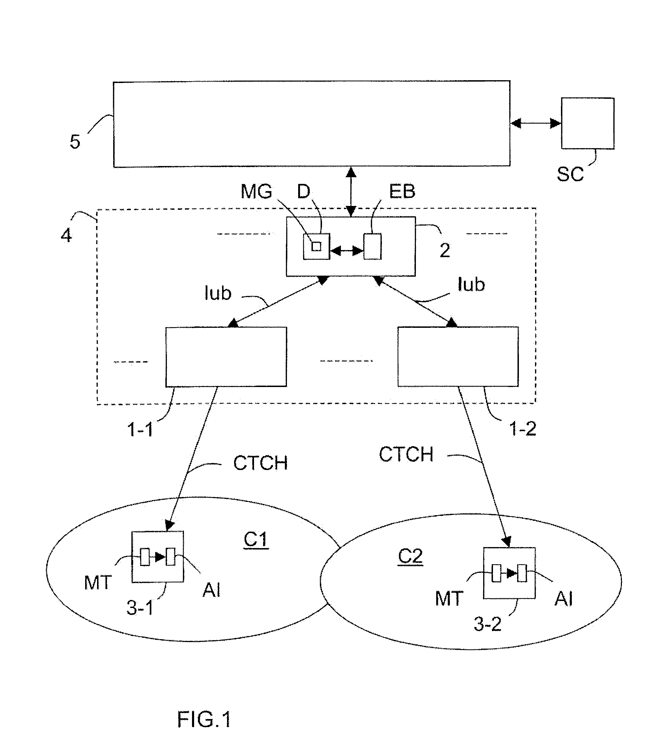

On se réfère tout d'abord à la figure 1 pour décrire, de façon très schématique, mais néanmoins suffisante à la compréhension de l'invention, un exemple de réseau (de (télé)communication) mobile dans lequel peut être mise en oeuvre l'invention.

Le réseau mobile comprend un réseau d'accès radio 4, appelé UTRAN (pour « UMTS Terrestrial Radio Access Network ») dans le cas de l'UMTS, connecté à un coeur de réseau (ou « core network ») 5. L'UTRAN comprend des stations de base 1-i, appelées « Node B » dans le cas de l'UMTS, et des contrôleurs de réseau radio 2, appelés « RNC » (pour « Radio Network Controller ») dans le cas de l'UMTS.

Dans l'exemple non limitatif illustré sur la figure 1, seules deux stations de base 1-1 et 1-2 (i = 1 ou 2) et un contrôleur 2 ont été représentés. Mais, l'indice i peut prendre n'importe quelle valeur supérieure ou égale à un (1), et le nombre de contrôleurs 2 peut être supérieur à un (1).

Les stations de base 1 sont principalement des émetteurs/récepteurs associés chacun à au moins une zone de couverture (ou cellule) Ci dans laquelle des communications radio peuvent être établies avec des équipements d'utilisateurs 3-j qui s'y trouvent situés. Les contrôleurs 2 sont en charge du contrôle du réseau radio et des actions effectuées par les différents équipements d'utilisateurs 3-j.

Les équipements d'utilisateurs 3-j (ou UE dans le cas de l'UMTS) sont de préférence mobiles, Dans l'exemple non limitatif illustré sur la figure 1, seuls deux équipements d'utilisateurs 3-1 et 3-2 (j = 1 ou 2) ont été représentés. Mais, l'indice j peut prendre n'importe quelle valeur supérieure ou égale à un (1).

Les équipements d'utilisateurs 3-j sont des terminaux de communication capables d'échanger par voie d'ondes des données, notamment de service et de contrôle, avec le réseau mobile (ou cellulaire). Il s'agit, par exemple, de terminaux mobiles tels que des téléphones mobiles. Mais, il pourrait s'agir de terminaux de communication d'autres types, comme par exemple des ordinateurs portables ou des assistants numériques personnels (ou PDAs) équipés d'un module de communication radio. Dans ce qui suit, on considère, à titre d'exemple illustratif et non limitatif; que les équipements d'utilisateurs 3-j sont des téléphones mobiles.

L'invention propose d'implanter dans (ou de coupler à) certains au moins des contrôleurs de réseau radio 2 du réseau d'accès radio 4, et de préférence dans tous, un dispositif de gestion D comprenant un module de gestion MG chargé tout d'abord de générer pour les téléphones mobiles 3-j des messages de signalisation de réseau d'accès radio contenant une partie au moins des informations destinées à leur permettre de se configurer afin d'être capable de surveiller au moins un service de diffusion de contenus multimédia dans des cellules Ci du réseau d'accès radio 4.

Chaque module de gestion MG est par ailleurs chargé d'ordonner au contrôleur de réseau radio 2, dans lequel son dispositif D est implanté (ou auquel son dispositif D est couplé), de transmettre chaque message qu'il génère aux téléphones mobiles 3-j. Selon l'invention, cette transmission se fait dans la bande (ou « in-band ») sur au moins un canal de trafic commun de type CTCH (pour « Common Traffic CHannel ») ou bien en partie ou en totalité sur un canal de signalisation de type BCH (pour « Broadcast CHannel »), notamment lorsque les informations sont relatives à une technologie préférentielle, comme on le verra plus loin.

On entend ici par « transmission dans la bande » le fait de transmettre les messages de l'invention multiplexés temporellement avec d'autres données ou messages, comme par exemple des données de service de type CBS (pour « Cell Broadcast Service »). On reviendra plus loin sur ces données de service de type CBS.

L'invention propose donc un plan de signalisation additionnel pour le transfert d'informations de configuration du réseau d'accès radio 4 (et plus précisément de ses contrôleurs 2) vers les téléphones mobiles 3-j.

Ces informations de configuration sont initialement issues d'au moins un serveur de contenus multimédia SC, qui est par exemple connecté au réseau de coeur CN (comme illustré sur la figure 1), ou bien à un ou plusieurs contrôleurs de réseau radio 2, ou encore à un centre de gestion et de maintenance de type OMC (pour « Operation and Maintenance Centre »), faisant partie d'un système de gestion de réseau ou NMS (pour « Network Management System ») du réseau mobile.

On notera qu'en présence de services de diffusion de types différents, accessibles dans les cellules Ci du réseau mobile, les informations de configuration peuvent provenir de plusieurs serveurs de contenus multimédia SC, dédiés chacun à un ou plusieurs types de contenus multimédia.

Par exemple, chaque serveur de contenus multimédia SC comprend une application chargée de générer des informations à destination des dispositifs de gestion D selon l'invention. Le module de gestion MG du dispositif de gestion D peut recevoir des informations soit qu'il n'a plus qu'à intégrer directement dans les messages, soit parmi lesquelles il doit effectuer des sélections avant de les intégrer dans les messages. Il est rappelé qu'un contrôleur de réseau radio 2 peut être couplé via une interface lu-B à plusieurs stations de base (Node Bs) 1-i, et que ces dernières peuvent éventuellement diffuser des contenus multimédia différents. Par conséquent, le module de gestion MG peut être amené à définir des ensembles d'informations de configuration différents pour les téléphones mobiles 3-j qui sont situés dans différentes cellules Ci associées aux stations de base 1-i qu'il contrôle.

Le module de gestion MG peut par exemple générer les messages de signalisation de réseau d'accès radio sous la forme de messages spécifiques de type BMC (pour « Boadcast and Multicast Control ») destinés à être transmis dans un canal de trafic commun de type CTCH. Il est rappelé que les messages de type BMC sont définis dans les spécifications techniques TS 25.324 du 3GPP. En variante, il peut générer les messages de signalisation de réseau d'accès radio sous la forme de messages de signalisation destinés à être transmis dans un canal de signalisation commun de type BCH.

Dans le premier cas (messages BMC), on utilise préférentiellement de nouveaux messages spécifiques, dédiés à la transmission des informations de configuration utiles aux téléphones mobiles 3-j, afin de permettre de les distinguer par rapport aux messages BMC existants, qui comportent d'autres types d'information, comme par exemple des données de service CBS (définies dans les spécifications techniques TS 23.041 du 3GPP), représentatives de messages applicatifs, par exemple d'alerte ou de messages de publicité.

La définition de tels nouveaux messages BMC est actuellement possible étant donné que seuls trois types de messages BMC sont actuellement utilisés sur les 255 possibles.

Dans ce mode de réalisation, le dispositif de gestion D peut constituer une entité d'adaptation de services de diffusion de type BMC (ou « BMC entity ») qui définit la couche protocolaire BMC chargée de transmettre tous les messages de type BMC.

Dans une variante, le module de gestion MG peut par exemple contrôler l'encapsulation des messages de signalisation de réseau d'accès radio (qui contiennent les informations de configuration) dans des messages de type BMC existants. Dans ce cas, une fois que le module de gestion MG a encapsulé un message de signalisation de réseau d'accès radio dans un message de type BMC, il ordonne l'intégration dans l'entête de ce message de type BMC de données signalant qu'ils comprennent un message de signalisation de réseau d'accès radio. Cet entête comprend donc un champ par exemple appelé « S/D » (pour « Signalisation/Données ») qui prend soit une première valeur binaire lorsque le message encapsulé est un message de signalisation de réseau d'accès radio, soit une seconde valeur binaire lorsque le message encapsulé est un message CBS.

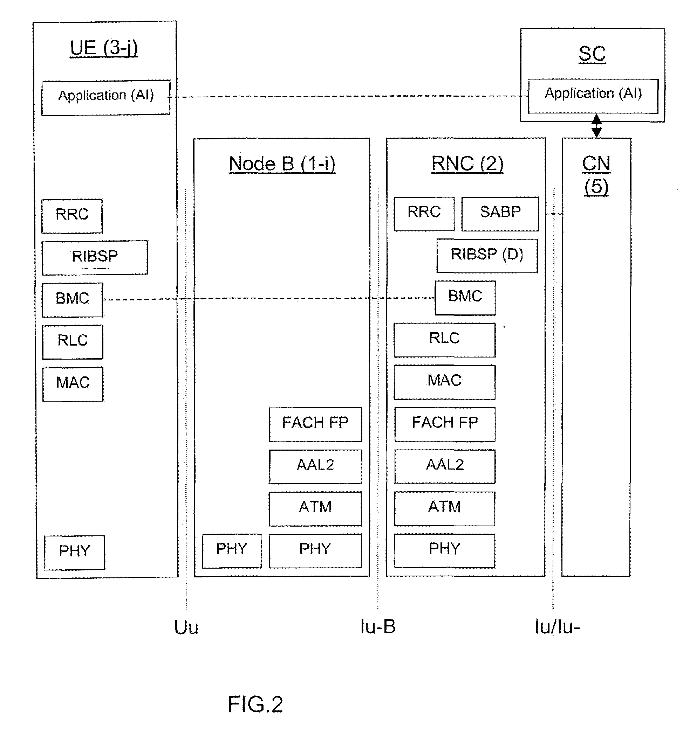

Cette solution, qui est illustrée sur la figure 2, nécessite l'insertion d'une nouvelle couche protocolaire (par exemple appelée RIBSP pour « RAN In-Band Signaling Protocol »), non seulement dans la pile de protocoles du contrôleur de réseau radio 2, mais également dans la pile de protocoles des téléphones mobiles 3-j. Cette nouvelle couche protocolaire RIBSP assure une fonction de multiplexage entre la couche protocolaire BMC et la couche d'application.

Dans le cas d'un contrôleur de réseau radio 2 la fonction de multiplexage permet de contrôler l'encapsulation dans les messages BMC des messages de signalisation de réseau d'accès radio et des messages CBS qui proviennent de l'interface lu-BC ou lu ou encore d'une interface propriétaire. Cette fonction est mise en oeuvre par le dispositif de gestion D, lequel peut alors être assimilé à la nouvelle couche protocolaire RIBSP.

Au sein du contrôleur de réseau radio 2 la couche protocolaire BMC est par exemple une entité d'adaptation de services de diffusion de type BMC (ou « BMC entity ») EB chargée de transmettre les messages de type BMC générés par le dispositif de gestion D.

Dans le cas d'un téléphone mobile 3-j la fonction de multiplexage permet d'extraire (démultiplexer) de chaque message de type BMC reçu le message de signalisation de réseau d'accès radio ou le message CBS qu'il encapsule, afin de le router vers une application interne Al. Cette fonction est mise en oeuvre par un module de traitement MT implanté dans le téléphone mobile 3-j, lequel module peut alors être assimilé à la nouvelle couche protocolaire RIBSP.

On notera que lorsque les messages de signalisation de réseau d'accès radio sont transmis dans un canal de signalisation commun de type BCH, le téléphone mobile 3-j n'a pas besoin de disposer d'un module de traitement MT. Il lui suffit en effet de transmettre ce type de message (BCH) à l'application interne Al concernée.

Lorsque l'application interne Al du téléphone mobile 3-j reçoit un message de signalisation de réseau d'accès radio, par exemple extraite par le module de traitement MT, elle utilise les informations qu'il contient pour se configurer de manière à permettre audit téléphone mobile 3-j de surveiller au moins un service de diffusion de contenus multimédia dans sa cellule de service Ci et/ou dans au moins une cellule voisine de cette dernière, ou bien dans une zone couverte par une autre technologie d'accès radio que celle utilisée par le réseau mobile auquel il est connecté.

Les messages de signalisation de réseau d'accès radio, qui sont générés par un dispositif de gestion D selon l'invention, peuvent comporter de nombreux types d'information de configuration de téléphone mobile 3-j.

Ainsi, ils peuvent comporter des informations de réseau relatives à des services de diffusion d'un ou plusieurs types différents. Ces types de services de diffusion sont par exemple MBMS, SDMB, DVB-H ou ceux offerts par l'évolution de l'UMTS appelée LTE ou par les réseaux GSM/GPRS (MBMS/GPRS).

Les informations de réseau relatives aux services de diffusion MBMS peuvent être par exemple dédiées à la configuration de canaux de trafic communs de type CTCH qui sont accessibles dans des cellules Ci voisines les unes des autres. Par exemple, chaque cellule dispose de son propre canal CTCH, et chaque canal CTCH est dédié à un même service de diffusion (ou ensemble de services de diffusion) ou bien à son propre service de diffusion (ou ensemble de services de diffusion).

Avec de telles informations, le téléphone mobile 3-j peut se configurer de manière à pouvoir surveiller non seulement le service de diffusion (ou l'ensemble de services de diffusion) qui est diffusé dans sa cellule de service, mais également le service de diffusion (ou l'ensemble de services de diffusion), éventuellement le même, qui est diffusé dans une ou plusieurs cellules voisines.

Les informations de réseau relatives aux services de diffusion MBMS peuvent être également relatives aux cellules qui sont voisines d'une cellule de service (considéré du point de vue du téléphone mobile 3-j). Plus précisément, elles peuvent signaler aux téléphones mobiles 3-j qui sont situés dans une cellule (qui constitue alors leur cellule de service) quelle cellule voisine supporte un canal de trafic commun de type CTCH transportant les données d'au moins un programme diffusé. Bien entendu cette signalisation de cellule définit également la configuration du canal de trafic commun de type CTCH associé.

Les informations de réseau relatives aux services de diffusion MBMS peuvent être également relatives à au moins une cellule dans laquelle est diffusé au moins un programme donné. Bien entendu cette signalisation de cellule définit également la configuration du canal de trafic commun de type CTCH associé.

Les informations de réseau relatives aux services de diffusion MBMS peuvent également porter sur une préférence donnée à une technologie d'accès radio ou bien à une liste de cellules pour l'écoute d'un service de diffusion MBMS.

Les informations de réseau relatives aux services de diffusion MBMS peuvent également porter sur la programmation dans le temps de(s) services de diffusion MBMS.

Les informations de réseau relatives aux services de diffusion MBMS peuvent également porter sur des modalités d'inscription à un service de diffusion. Il pourra par exemple s'agir de l'adresse http d'un serveur de diffusion de contenus.

Les messages de signalisation de réseau d'accès radio peuvent également comporter des informations de réseau destinées à permettre aux téléphones mobiles 3-j d'effectuer des procédures qui sont supportées par un protocole de contrôle et de configuration de ressources radio, comme par exemple le protocole RRC (« Radio Resource Control » - sous-niveau du niveau 3 de l'interface radio UMTS), et qui ne nécessitent pas de génération d'accusé de réception (ou « acknowledgement receipt »).

Parmi ces procédures, on peut notamment citer le contrôle de mesures et l'établissement, la suppression ou la reconfiguration d'un lien entre un contrôleur de réseau radio 2 et un téléphone mobile 3-j sur un canal de transport de type FACH (pour « Forward Access Channel » - canal de transport UMTS qui constitue la partie descendante (ou « downlink ») d'une paire de canaux de transport de type RACH (« Random Access Channel »)), c'est-à-dire ce que l'on appelle en anglais un « Radio Bearer ». On peut également citer la procédure de sélection de la cellule ou de la technologie d'accès radio qui est la plus appropriée pour écouter un canal de diffusion, ainsi que la procédure de modification de(s) paramètres ou de l'état d'un canal de diffusion en fonction de la date.

Les messages de signalisation de réseau d'accès radio peuvent également comporter des informations de réseau relatives à au moins une technologie de diffusion présente dans au moins une cellule Ci du réseau d'accès radio 4, ou dans le voisinage d'une cellule de ce dernier, comme par exemple la technologie MBMS, SDMB ou DVB-H.

Les messages de signalisation de réseau d'accès radio peuvent également comporter des informations de réseau relatives à au moins une technologie d'accès radio présente dans au moins une cellule Ci du réseau d'accès radio 4, ou dans le voisinage d'une cellule de ce dernier, comme par exemple la technologie GSM/GPRS.

Les messages de signalisation de réseau d'accès radio peuvent également comporter des informations de réseau relatives à au moins une technologie d'accès radio préférentielle, c'est à dire que l'utilisateur d'un téléphone mobile 3-j devrait sélectionner en priorité pour l'écoute des services diffusés. Par exemple, un téléphone mobile 3-j peut être situé dans une cellule Ci ou au voisinage d'une cellule Ci d'un réseau UMTS qui diffuse un service de diffusion (par exemple MBMS), mais il peut être préférable d'accéder à ce service de diffusion au moyen d'une autre technologie d'accès radio (par exemple GPRS, LTE ou DVB-H) disponible dans des cellules ou des zones de couverture voisines de celles du réseau d'accès radio 4 du réseau UMTS. Un message de signalisation peut alors avertir les téléphones mobiles 3-j de la ou des technologie(s) d'accès radio qu'il faut utiliser en priorité. Il en va de même pour une technologie de diffusion qu'il peut être préférable d'utiliser pour accéder à un service de diffusion plutôt qu'à un autre pour obtenir un même contenu.

Grâce à l'invention, il est désormais possible de transmettre à un téléphone mobile 3-j, situé dans une cellule de service, des informations sur des cellules voisines de cette dernière, mais également des informations relatives aux radio bearers. Par conséquent, l'UTRAN 4 peut appliquer un ou plusieurs flux de données MBMS (ou autre) sur des canaux de type R99, soit dans une cellule de service, soit dans des cellules voisines de cette dernière. Un téléphone mobile 3-j peut alors acquérir les configurations des cellules et des radio bearers afin de contrôler les flux de données MBMS (ou autre) que transportent ces derniers. Il peut alors recevoir des canaux PCH (« Paging CHannels ») et transmettre des requêtes d'accès sur des canaux de transport de type RACH.

Le dispositif de gestion D selon l'invention, et notamment son module de gestion MG, l'entité MBMS EB et le module de traitement MT peuvent être réalisés sous la forme de modules logiciels (ou informatiques), de circuits électroniques, ou d'une combinaison de circuits et de logiciels.

Les informations de configuration étant transportées (en totalité ou en partie) par un canal de trafic commun de type CTCH ou par un canal de signalisation commun de type BCH, elles sont donc notamment accessibles aux équipements d'utilisateurs actuels, c'est-à-dire ceux conformes à la version n°99 (R99). Elles sont aussi notamment accessibles aux équipements d'utilisateurs des futures générations capables de recevoir les canaux CTCH et BCH.

Par ailleurs, grâce à l'invention chaque serveur de contenus multimédia peut être découplé totalement des problèmes radio, étant donné que c'est désormais le dispositif de gestion D qui se charge, au sein d'un contrôleur de réseau radio, de l'intégration des informations de configuration (relatives aux contenus à diffuser) qu'il reçoit de ce serveur de contenus multimédia.

L'invention ne se limite pas aux modes de réalisation de dispositif de gestion, de contrôleur de réseau radio et d'équipement d'utilisateur (ou terminal de communication) décrits ci-avant, seulement à titre d'exemple, mais elle englobe toutes les variantes que pourra envisager l'homme de l'art dans le cadre des revendications ci-après.

## Revendications

1. Dispositif (D) de gestion de fourniture à des équipements d'utilisateurs (3-j) d'informations relatives à un réseau de (télé)communication mobile disposant d'un réseau d'accès radio (4), **caractérisé en ce qu'**il comprend des moyens de gestion (MG) agencés pour générer à destination d'équipements d'utilisateurs (3-j) des messages de signalisation de réseau d'accès radio contenant une partie au moins des informations destinées à permettre auxdits équipements d'utilisateurs (3-j) de se configurer de manière à surveiller au moins un service de diffusion de contenus multimédia dans des cellules (Ci) dudit réseau d'accès radio (4), et pour ordonner à un contrôleur de réseau radio (2) dudit réseau d'accès radio (4) de transmettre lesdits messages auxdits équipements d'utilisateurs (3-j) dans la bande sur au moins un canal de trafic commun de type CTCH ou dans un canal de signalisation de type BCH.

2. Dispositif selon la revendication 1, **caractérisé en ce que** lesdits moyens de gestion (MG) sont agencés pour générer des messages de signalisation de réseau d'accès radio sous la forme de messages spécifiques de type BMC.

3. Dispositif selon la revendication 1, **caractérisé en ce que** lesdits moyens de gestion (MG) sont agencés pour contrôler l'encapsulation desdits messages de signalisation de réseau d'accès radio dans des messages de type BMC, et pour ordonner l'intégration dans l'entête desdits messages de type BMC de données signalant qu'ils comprennent un message de signalisation de réseau d'accès radio.

4. Dispositif selon l'une des revendications 1 à 3, **caractérisé en ce que** lesdits moyens de gestion (MG) sont agencés pour intégrer dans lesdits messages de signalisation de réseau d'accès radio des informations choisies dans un groupe comprenant au moins des informations de réseau relatives à des services de diffusion, des informations de réseau destinées à permettre auxdits équipements d'utilisateurs (3-j) d'effectuer des procédures supportées par un protocole de contrôle et de configuration de ressources radio et ne nécessitant pas de génération d'accusé de réception, des informations de réseau relatives à au moins une technologie d'accès radio présente dans au moins une cellule (Ci) dudit réseau d'accès radio (4) ou dans le voisinage d'une cellule de ce dernier, des informations de réseau relatives à au moins une technologie de diffusion présente dans au moins une cellule (Ci) dudit réseau d'accès radio (4) ou dans le voisinage d'une cellule de ce dernier, et des informations de réseau relatives à au moins une technologie d'accès radio préférentielle présente dans au moins une cellule dudit réseau d'accès radio (4) ou dans le voisinage d'une cellule de ce dernier (4).

5. Dispositif selon la revendication 4, **caractérisé en ce que** lesdits services de diffusion sont choisis dans un groupe comprenant au moins MBMS, SDMB, DVB-H, ceux offerts par un réseau de type LTE et ceux offerts par un réseau GSM/GPRS.

6. Dispositif selon la revendication 5, **caractérisé en ce que** lesdites informations de réseau relatives à des services de diffusion de type MBMS sont choisies dans un groupe comprenant au moins des informations de configuration de canaux de trafic communs de type CTCH accessibles dans une cellule de service et dans des cellules voisines de ladite cellule de service, des informations relatives aux cellules voisines d'une cellule de service et qui supportent un canal de trafic commun de type CTCH transportant les données d'au moins un programme diffusé, et des informations relatives à au moins une cellule dans laquelle est diffusé au moins un programme donné.

7. Dispositif selon l'une des revendications 4 à 6, **caractérisé en ce que** lesdites procédures sont choisies dans un groupe comprenant au moins l'établissement, la suppression ou la reconfiguration d'un lien entre un contrôleur de réseau radio (2) et un équipement d'utilisateur (3-j) sur un canal de transport de type FACH, un contrôle de mesures, une sélection de la cellule ou de la technologie la plus appropriée pour écouter un canal de diffusion, et des modifications de paramètres ou d'état d'un canal de diffusion en fonction de la date.

8. Contrôleur de réseau radio (2) pour un réseau d'accès radio (4) d'un réseau de (télé)communication mobile, **caractérisé en ce qu'**il comprend un dispositif de gestion (D) selon l'une des revendications précédentes.

9. Contrôleur de réseau radio selon la revendication 8, **caractérisé en ce qu'**il comprend une entité d'adaptation de services de diffusion de type BMC (EB) agencée pour transmettre lesdits messages de signalisation générés par ledit dispositif de gestion (D).

10. Equipement d'utilisateur (3-j), propre à se connecter à un réseau d'accès radio (4) d'un réseau de (télé)communication mobile, **caractérisé en ce qu'**il comprend des moyens de traitement (MT) agencés, en cas de réception, en provenance d'un contrôleur de réseau radio (2) selon l'une des revendications 8 et 9, d'un message de type BMC dans lequel se trouve encapsulé un message de signalisation de réseau d'accès radio, pour extraire ledit message encapsulé afin de le transmettre à une application interne (AI) propre à utiliser les informations qu'il contient et qui définissent comment se configurer pour surveiller au moins un service de diffusion de contenus multimédia dans des cellules (Ci) dudit réseau d'accès radio (4).

11. Utilisation du dispositif de gestion (D), du contrôleur de réseau radio (2) et de l'équipement d'utilisateur (3-j) selon l'une des revendications précédentes dans un réseau de (télé)communication mobile de type choisi dans un groupe comprenant au moins GPRS, UMTS et CDMA.
